# EUROPÄISCHE PATENTSCHRIFT

(11) **EP 4 232 735 B1**
(45) Veröffentlichungstag und Bekanntmachung des Hinweises auf die Patenterteilung: **11.12.2024**
(21) Anmeldenummer: 21801840.6
(22) Anmeldetag: 18.10.2021
(51) Int. Cl.: F16L 37/092

(54) **FLUIDVERBINDUNGSEINHEIT**
FLUID CONNECTION UNIT
UNITÉ DE CONNEXION DE FLUIDE

(30) Priorität: 22.10.2020 DE 102020127867
(43) Veröffentlichungstag der Anmeldung: 30.08.2023
(73) Patentinhaber: Fränkische Rohrwerke Gebr. Kirchner GmbH + Co KG, 97486 Königsberg/Bayern (DE)
(72) Erfinder: GEHRING, Toni, 97437 Haßfurt (DE); HÜMPFNER, Michael, 97437 Prappach (DE); WELSCH, Thomas, 97437 Haßfurt (DE)
(74) Vertreter: Weickmann & Weickmann PartmbB
(86) Internationale Anmeldenummer: PCT/EP2021/078846
(87) Internationale Veröffentlichungsnummer: WO 2022/084265

(56) Entgegenhaltungen:
- DE-A1- 102014 115 092
- DE-A1- 102017 215 675

## Beschreibung

Die Erfindung betrifft eine Fluidverbindungseinheit, welche dazu eingerichtet ist, eine, nicht zu der Fluidverbindungseinheit gehörende, Fluidleitung mit einer weiteren, ebenfalls nicht zu der Fluidverbindungseinheit gehörenden, Fluidleitung zu verbinden.

Es sind Fluidverbindungseinheiten bekannt, welche dazu eingerichtet sind, eine Fluidleitung mit einer weiteren Fluidleitung zu verbinden. Jedoch weisen die bekannten Fluidverbindungseinheiten das Problem auf, dass eine an einer solchen Fluidverbindungseinheit angeordnete Dichtungseinheit, wie beispielsweise ein O-Ring, beim Verbinden der Fluidverbindungseinheit mit der Fluidleitung aus ihrem Sitz geschoben werden kann, wodurch keine ausreichende Abdichtung gegenüber einer Außenseite erreicht werden kann. Es gibt ferner Fluidverbindungseinheiten, welche versuchen, dieses Problem durch Schutzelemente für den O-Ring zu lösen, jedoch wird das Problem dadurch lediglich von der Fluidleitung zu dem Schutzelement verlagert, welches das Dichtungselement beim Verbinden der Fluidverbindungseinheit mit der Fluidleitung aus dem Sitz schieben oder ziehen kann.

Aus dem Dokument DE 10 2014 115092 A1, welches als nächstliegender Stand der Technik erachtet wird, ist eine Fluidverbindungseinheit bekannt, welche ein Schutzelement umfasst, auf welches eine zu verbindende Fluidleitung aufgeschoben werden kann, um eine Beschädigung eines Dichtungselements zu verhindern. Ferner sei auf das Dokument DE 10 2017 215675 A1 hingewiesen.

Es ist daher die Aufgabe der vorliegenden Erfindung, eine Fluidverbindungseinheit bereitzustellen, welche ein Verbinden einer Fluidverbindungseinheit mit einer Fluidleitung bei gleichzeitigem Gewährleisten ermöglicht, dass eine Dichtungseinheit funktional verbleibt.

Diese Aufgabe wird erfindungsgemäß durch eine Fluidverbindungseinheit gemäß Anspruch 1 gelöst.

Im Sinne der vorliegenden Beschreibung sollen sich die als "radial" bzw. "axial" bezeichneten Richtungen relativ auf eine Achse beziehen, welche durch die Längserstreckungsrichtung eines Fluidströmungskanals definiert wird, welcher im Inneren des Stutzenabschnitts ausgebildet ist. Der "nominale Außendurchmesser des Stutzenabschnitts" soll sich hier auf denjenigen Teil des Stutzenabschnitts beziehen, welcher dazu eingerichtet ist, in eine Fluidleitung eingeführt zu werden. Etwaige Stützrippen, Ausnehmungen oder Anlageschrägen können gegebenenfalls als nicht zum nominalen Durchmesser gehörig angesehen werden.

Dadurch, dass der Innendurchmesser des zylindrischen Abschnitts des Schutzelements frei von nach radial innen gerichteten Vorsprüngen sein kann und die Fluidleitung auf einen Außenumfang des zylindrischen Abschnitts des Schutzelements aufgeschoben werden kann, kann das Dichtungselement zuverlässig dagegen geschützt werden, durch die Fluidleitung oder das Schutzelement derart verlagert zu werden, dass es im verbundenen Zustand von Fluidverbindungseinheit und Fluidleitung seine Funktion nicht mehr korrekt ausüben kann.

Insbesondere die weitere Fluidleitung muss nicht als eine rohrartige Fluidleitung ausgebildet sein, sondern kann beispielsweise ein mit der Fluidverbindungseinheit verbindbarer Schlauch oder eine andere ein Fluid leitende Vorrichtung sein. Daher kann an demjenigen Ende der Fluidverbindungseinheit, mit welchem die weitere Fluidleitung zu verbinden ist, zum Beispiel ein Gewinde, ein Sägezahnprofil, ein T-Stück oder ähnliches angeordnet sein. Alternativ kann die Fluidverbindungseinheit im Wesentlichen symmetrisch ausgebildet sein, um an beiden Enden davon eine rohrartige Fluidleitung anbringen zu können.

Das wenigstens eine Dichtungselement kann jeweils in einer Nut des Stutzenabschnitts angeordnet sein, deren Nutboden einen kleineren Durchmesser aufweist als der nominale Außendurchmesser des Stutzenabschnitts. Ferner kann die Nut, in axialer Erstreckungsrichtung des Stutzenabschnitts betrachtet, breiter als das aufzunehmende Dichtungselement sein, insbesondere breiter als das 1,5 bis 2-fache des Dichtungselements, wodurch die Nut das Dichtungselement auch in einem komprimierten Zustand aufnehmen kann.

Selbstverständlich ist es denkbar, dass mehre Dichtungselemente an dem Stutzenabschnitt angeordnet sind. In diesem Fall kann die axiale Länge des zylindrischen Abschnitts des Schutzelements entsprechend angepasst werden, um in der anfänglichen Stellung sämtliche Dichtungselemente radial zu überlagern. Alternativ kann das Schutzelement aber auch die weiteren Dichtungselemente erst auf ein Aufschieben der Fluidleitung auf das Schutzelement hin kontaktieren bzw. komprimieren.

Vorteilhafterweise kann der Kalibrierungsabschnitt von dem Stutzenabschnitt und dem Schutzelement getrennt oder trennbar ausgebildet sein. So kann der Kalibrierungsabschnitt und das Schutzelement, zum Beispiel unter Verwendung eines Spritzgussverfahrens, einstückig ausgebildet werden und derart eingerichtet sein, dass das Schutzelement, auf ein Aufschieben der Fluidleitung auf das Schutzelement hin, von dem Kalibrierungsabschnitt getrennt werden kann.

Der Kalibrierungsabschnitt kann an einer nach außen weisenden Fläche wenigstens eine Ausnehmung aufweisen. Solche Ausnehmungen können insbesondere dazu eingerichtet sein, eine Reibungsfläche und damit einen Widerstand gegen eine relative Verlagerung zwischen Kalibrierungsabschnitt und Fluidleitung zu verringern. Beispielsweise können die Ausnehmungen im Wesentlichen rechteckig sein. Die Ausnehmungen können im Wesentlichen gleichmäßig über einen Umfang des Kalibrierungsabschnitts verteilt angeordnet sein.

Das Schutzelement kann einen Abschnitt umfassen, welcher, in der anfänglichen Stellung, an einer radial inneren Seite und/oder an einer radial äußeren Seite davon von einem Abschnitt des Kalibrierungsabschnitts überlagert ist. Eine Überlagerung des Kalibrierungsabschnitts an einer radial äußeren Seite des Schutzelements kann ermöglichen, dass ein Ende der Fluidleitung davon abgehalten werden kann, beim Aufschieben auf den zylindrischen Abschnitt des Schutzelements unmittelbar mit einem Längsende des zylindrischen Abschnitts des Schutzelements in Kontakt zu treten und gegebenenfalls das Schutzelement dadurch zu verlagern. Dies kann insbesondere bei unrunden Querschnitten eines Endes der Fluidleitung denkbar sein.

In einer Weiterbildung der vorliegenden Erfindung kann das Schutzelement in einer anfänglichen Stellung mit dem Kalibrierungsabschnitt gekoppelt sein. Eine Freigabe des Schutzelements kann zum Beispiel durch ein Überschreiten einer vorbestimmten Kraft durch das Aufschieben der Fluidleitung erreicht werden.

Insbesondere kann der Kalibrierungsabschnitt mit dem Stutzenabschnitt eingegriffen sein, wobei insbesondere eines aus Kalibrierungsabschnitt und Stutzenabschnitt einen Vorsprung und das andere eine dazu passende Ausnehmung aufweisen kann.

Dabei können/kann der Vorsprung und/oder die Ausnehmung in Umfangsrichtung des Stutzenabschnitts bzw. des Kalibrierungsabschnitts vollständig umlaufend sein. Dies kann eine einfache Ausgestaltung der Rasteinrichtung ermöglichen.

Ferner kann das Schutzelement einen Anschlagsabschnitt umfassen, welcher dazu eingerichtet ist, mit einem freien Ende der Fluidleitung in Kontakt zu treten, so dass das Schutzelement zusammen mit der Fluidleitung verlagert wird, wenn die Fluidleitung, nach dem Kontaktieren des Anschlagsabschnitts, weiter auf den Stutzenabschnitt aufgeschoben wird. Der Anschlagsabschnitt kann beispielsweise als ein von dem zylindrischen Abschnitt des Schutzelements nach radial außen vorstehender Kragen oder als eine schräg nach radial außen verlaufende Schräge ausgebildet sein.

Die Fluidverbindungseinheit kann ferner eine Hülse und/oder eine Anbringungshülse umfassen, welche den Stutzenabschnitt radial außerhalb zumindest teilweise umgibt. Insbesondere kann die Hülse aus Metall und/oder die Anbringungshülse aus Kunststoff ausgebildet sein.

Hierbei kann die Hülse und/oder die Anbringungshülse wenigstens eine Durchbrechung umfassen, welche in radialer Richtung durch die Wandung der Hülse bzw. der Anbringungshülse verläuft, wobei die Durchbrechung der Hülse bzw. der Anbringungshülse derart angeordnet ist, dass von außen erkennbar ist, wenn das Schutzelement die Endposition an dem Stutzenabschnitt erreicht hat. Somit kann eine korrekte Verbindung der Fluidleitung mit der Fluidverbindungseinheit erkannt werden.

Zumindest derjenige Abschnitt des Schutzelements, welcher in dessen Endposition durch die Durchbrechung der Hülse bzw. der Anbringungshülse erkennbar ist, kann eine vorbestimmte Farbe aufweisen, welche von einer Farbe eines Abschnitts der Fluidverbindungseinheit verschieden ist, welcher durch die Durchbrechung der Hülse bzw. der Anbringungshülse in einer anfänglichen Stellung des Schutzelements erkennbar ist. Das heißt, in der anfänglichen Stellung des Schutzelements, insbesondere solange bis die Fluidleitung vollständig aufgeschoben und korrekt mit der Fluidverbindungseinheit verbunden ist und das Schutzelement seine Endposition erreicht hat, ist dieser Abschnitt des Schutzelements durch die

Durchbrechung der Hülse bzw. der Anbringungshülse nicht erkennbar.

Insbesondere kann das Schutzelement dazu eingerichtet sein, das wenigstens eine Dichtungselement nach radial innen zu komprimieren. Das Dichtungselement kann so komprimiert werden, dass es zu dem nominalen Außendurchmesser des Stutzenabschnitts im Wesentlichen bündig ist.

Ferner kann der Stutzenabschnitt einen Bereich mit verringertem Außendurchmesser aufweisen, welcher, in einer Verlagerungsrichtung des Schutzelements von der anfänglichen Stellung an dem Kalibrierungsabschnitt in Richtung der Endposition des Schutzelements betrachtet, dem wenigstens einen Dichtungselement nachgelagert ist. Hierdurch kann eine Reibung zwischen Schutzelement und Stutzenabschnitt verringert werden und ein Verlagern des Schutzelements erleichtert werden.

Vorteilhafterweise kann der Innendurchmesser des Schutzelements an wenigstens einem axialen Ende davon ansteigen. Somit kann eine Einführschräge zum Aufschieben des Schutzelements auf das Dichtungselement gebildet werden, ohne das Dichtungselement zu verletzen oder das Dichtungselement aus seiner Nut zu schieben.

Das Schutzelement kann eine Rasteinrichtung aufweisen, welche dazu eingerichtet ist, das Schutzelement in der Endposition zu halten. Dabei kann das Schutzelement mit einer entsprechenden Gegenrasteinrichtung verrasten, welche an einer weiteren Komponente der Fluidverbindungseinheit, zum Beispiel einer Anbringungshülse, angeordnet ist.

Die Fluidverbindungseinheit kann ferner eine Klemmhülse umfassen, welche eine Mehrzahl von Widerhaken aufweist, welche dazu eingerichtet sind, mit der Fluidleitung in Eingriff zu treten, um ein Herausziehen der Fluidleitung aus der Fluidverbindungseinheit entgegen der Einführrichtung zu verhindern bzw. zu erschweren. Die Klemmhülse kann einen Basisring umfassen. Von dem Basisring können sich auf beiden Seiten davon Vorsprünge in axialer Richtung erstrecken. Von diesen Vorsprüngen, welche insbesondere als federnde Vorsprünge ausgebildet sein können, können die Widerhaken jeweils nach radial innen vorstehen. Sind zwei relativ zu dem Basisring der Klemmhülse in entgegensetzte Richtungen verlaufende Vorsprünge an einer im Wesentlichen gleichen Stelle des Umfangs des Basisrings angeordnet, das heißt zwei Vorsprünge liegen sich relativ zu dem Basisring in einer axialen Richtung gegenüber, so kann eine Art Wippenmechanismus gebildet werden. Der Wippenmechanismus kann ein anfänglich leichtes Verbinden von Klemmhülse und Fluidleitung ermöglichen, da, solange nur einer der einander gegenüberliegenden Vorsprünge von der Fluidleitung nach radial außen gedrängt wird, der jeweils andere Vorsprung nach radial innen ausweichen kann. Im Umkehrschluss, wenn sämtliche Widerhaken der Klemmhülse mit der Fluidleitung in Eingriff sind, kann der Wippenmechanismus ermöglichen, dass eine Bewegung eines Widerhakens bzw. eines Vorsprungs nach radial außen, beispielsweise auf Grund einer Auszugsbewegung der Fluidleitung aus der Fluidverbindungseinheit, eine Verstärkung der Eingriffskraft des jeweils anderen Vorsprungs mit der Fluidleitung bewirkt.

Sämtliche der oben erwähnten Komponenten können aus Kunststoff ausgebildet sein, wobei der Kunststoff beispielsweise thermoplastisches Polysulfon (z. B. PPSU und/oder PSU) umfassen kann. Das Kunststoffmaterial kann dabei glasfaserverstärkt und/oder kohlenstofffaserverstärkt sein. Insbesondere kann ein Grundkörper, an welchem der Stutzenabschnitt ausgebildet ist, PPSU umfassen, um dessen Temperaturstabilität gegenüber heißen Fluiden zu verbessern. Vorteilhafterweise kann das Schutzelement aus einem glasfaserverstärkten und/oder kohlenstofffaserverstärkten Kunststoff hergestellt sein. Hierdurch kann eine Widerstandsfähigkeit gegenüber Belastungen, insbesondere Spannungen, verbessert werden, welche zum Beispiel durch eine elastische Federkraft des Dichtungselements in seinem komprimierten Zustand aufgebracht werden. Insbesondere die Hülse kann jedoch aus Metall, zum Beispiel Stahl oder Aluminium, ausgebildet sein. Damit kann eine Stabilität der Hülse gegen die Kraft der Klemmhülse verbessert werden.

Die vorliegende Erfindung wird im Folgenden in größerem Detail mit Bezug auf die begleitenden Zeichnungen anhand von Ausführungsbeispielen beschrieben werden. Es stellt dar:
- Figur 1: eine Explosionsansicht eines ersten Ausführungsbeispiels der erfindungsgemäßen Fluidverbindungseinheit gemäß dem ersten Ausführungsbeispiel;
- Figur 2: eine perspektivische Ansicht eines Grundkörpers der Fluidverbindungseinheit gemäß dem ersten Ausführungsbeispiel;
- Figur 3: eine perspektivische Ansicht eines Schutzelements der Fluidverbindungseinheit gemäß dem ersten Ausführungsbeispiel;
- Figur 4: eine perspektivische Ansicht eines Kalibrierungsabschnitts der Fluidverbindungseinheit gemäß dem ersten Ausführungsbeispiel;
- Figur 5: eine Seitenquerschnittsansicht der Fluidverbindungseinheit gemäß dem ersten Ausführungsbeispiel;
- Figur 6: eine weitere Seitenquerschnittsansicht der Fluidverbindungseinheit gemäß dem ersten Ausführungsbeispiel;
- Figur 7: eine perspektivische Ansicht der Fluidverbindungseinheit gemäß dem ersten Ausführungsbeispiel in einem zusammengebauten Zustand;
- Figur 8: eine perspektivische Ansicht einer Klemmhülse der Fluidverbindungseinheit;
- Figur 9: eine perspektivische Ansicht einer Anbringungshülse der Fluidverbindungseinheit gemäß dem ersten Ausführungsbeispiel;
- Figur 10: eine perspektivische Ansicht einer Hülse der Fluidverbindungseinheit gemäß dem ersten Ausführungsbeispiel;
- Figur 11: eine perspektivische Ansicht eines Grundkörpers einer erfindungsgemäßen Fluidverbindungseinheit gemäß einem zweiten Ausführungsbeispiel;
- Figur 12: eine Seitenquerschnittsansicht der Fluidverbindungseinheit gemäß dem zweiten Ausführungsbeispiel;
- Figur 13: ein vergrößertes Detail der Ansicht aus Figur 12;
- Figur 14: eine perspektivische Ansicht eines Schutzelements gemäß dem zweiten Ausführungsbeispiel; und
- Figur 15: eine perspektivische Ansicht einer Hülse sowie einer Anbringungshülse der Fluidverbindungseinheit gemäß einem zweiten Ausführungsbeispiel.

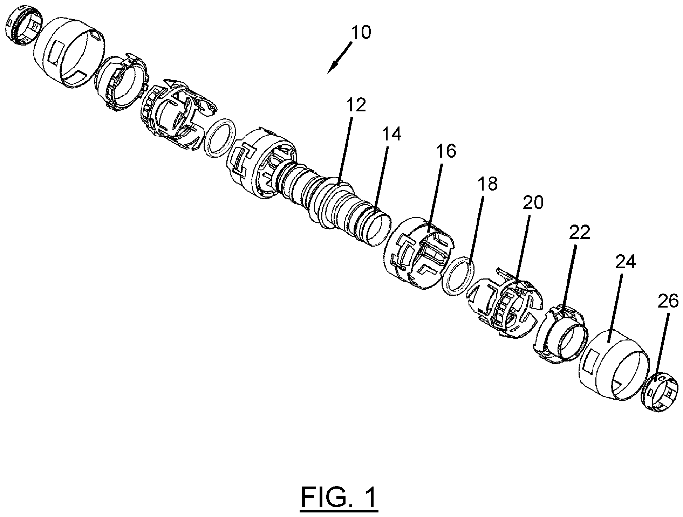

In Figur 1 ist eine erfindungsgemäße Fluidverbindungseinheit gemäß einem ersten Ausführungsbeispiel allgemein mit dem Bezugszeichen 10 bezeichnet. Wie in Figur 1 zu erkennen ist, ist die Fluidverbindungseinheit 10 symmetrisch redundant aufgebaut. Das kommt daher, dass die in Figur 1 dargestellte Fluidverbindungseinheit 10 dazu eingerichtet ist, eine erste (nicht dargestellte) Fluidleitung, welche beispielsweise als ein Rohr ausgebildet ist, mit einer zweiten (nicht dargestellten) Fluidleitung, welche beispielsweise ebenfalls als ein Rohr ausgebildet ist, zu verbinden. Alternativ könnte die erfindungsgemäße Fluidverbindungseinheit auch als Anschlusseinheit an einem Paneel ausgebildet sein, so dass die Fluidverbindungseinheit nur eine der beiden redundanten symmetrischen Hälften aufweisen muss. Aus diesem Grund wird im Folgenden maßgeblich nur auf eine Hälfte der Fluidverbindungseinheit 10 eingegangen werden, wobei dies ebenfalls auf die andere Hälfte der Fluidverbindungseinheit 10 anwendbar sein kann.

Wie in Figur 1 zu sehen, umfasst die Fluidverbindungseinheit 10 einen Grundkörper 12 mit einem Stutzenabschnitts 14, eine Anbringungshülse 16, ein Dichtungselement 18, welches hier als ein O-Ring ausgebildet ist, eine Klemmhülse 20, ein Schutzelement 22, eine Hülse 24 und einen Kalibrierungsabschnitt 26.

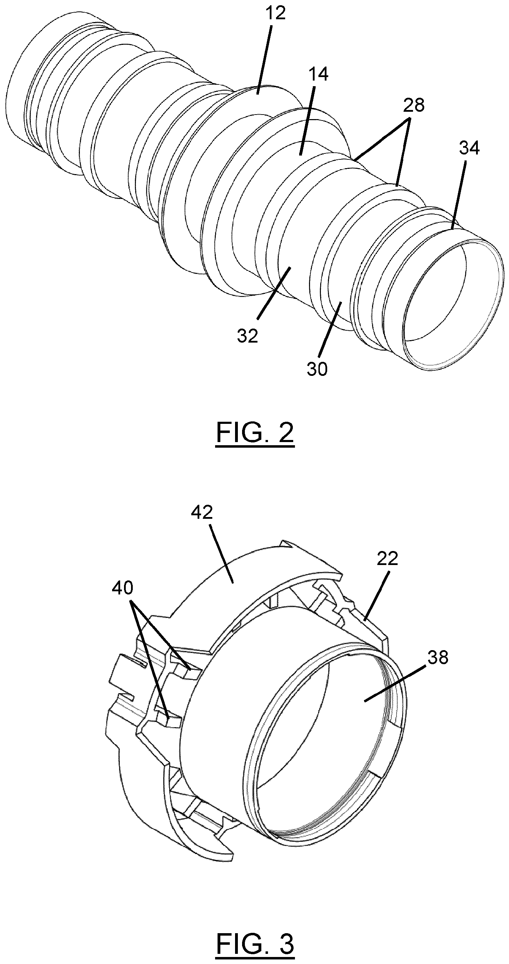

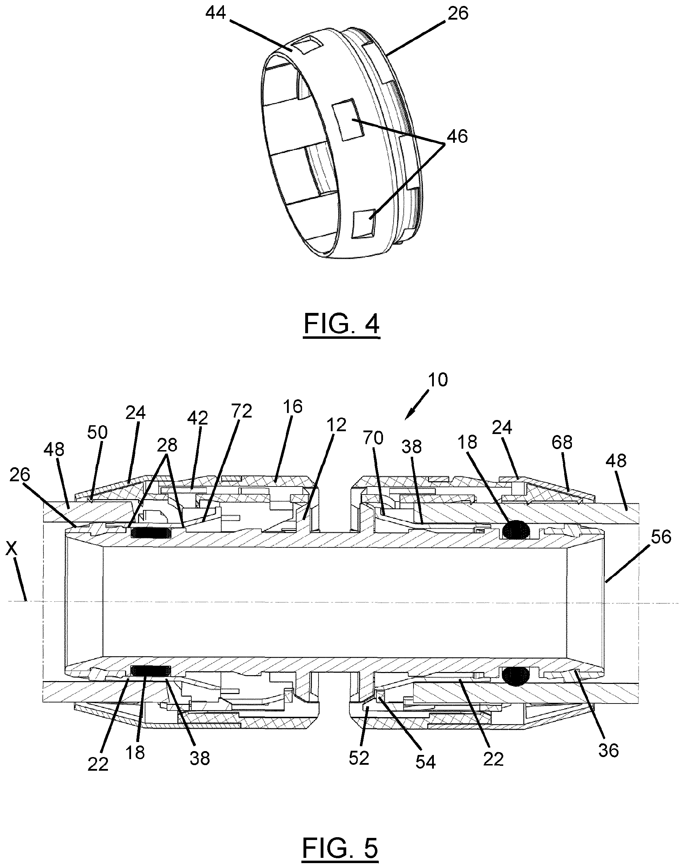

In Figur 2 ist der Stutzenabschnitt 14 separat dargestellt. Der Stutzenabschnitt 14 weist einen nominalen Außendurchmesser 28 auf. Ferner weist der Stutzenabschnitt 14 eine Nut 30 auf, in welcher das Dichtungselement 18 angeordnet ist (siehe Figur 5). Darüber hinaus weist der Stutzenabschnitt 14 einen Bereich mit verringertem Außendurchmesser 32 auf, welcher zwischen zwei Abschnitten des nominalen Außendurchmessers 28 angeordnet ist, und welcher dazu eingerichtet, eine Reibung zwischen dem Stutzenabschnitt 14 und dem Schutzelement 22 zu verringern.

An dem freien Ende (in Figur 2 rechts dargestellt) des Stutzenabschnitts 14 ist eine Ausnehmung 34 angeordnet, welche dazu eingerichtet ist, mit einem Vorsprung 36 (siehe Figur 5) des Kalibrierungsabschnitts 26 einzugreifen, um den Kalibrierungsabschnitt 26 an dem Stutzenabschnitt 14 zu sichern.

Das in Figur 3 dargestellte Schutzelement 22 weist einen zylindrischen Abschnitt 38 auf, welcher in dem in Figur 3 dargestellten Ausführungsbeispiel eine im Wesentlichen konstante Wandstärke aufweist. An einem axialen Ende des zylindrischen Abschnitts 38 sind mit diesem Stege 40 verbunden, welche sich nach radial außen (in Figur 3 schräg nach radial außen) zu einem Anzeigeabschnitt 42 des Schutzelement 22 erstrecken. Der Anzeigeabschnitt 42, dessen Funktion weiter unten beschrieben werden wird, umfasst hier drei zylindrische Teilabschnitte, welche jeweils entlang eines Abschnitts eines gemeinsamen Umfangs mit gleichem Außendurchmesser angeordnet sind.

In Figur 4 ist der Kalibrierungsabschnitt 26 gesondert dargestellt. Der Kalibrierungsabschnitt 26 weist eine Außenfläche 44 auf, welche einen zu einem, in Figur 4 links dargestellten, freien Ende des Kalibrierungsabschnitts 26 abnehmenden Außendurchmesser aufweist. An der Außenfläche 44 des Kalibrierungsabschnitt 26 sind rechteckige Ausnehmungen 46 angeordnet, welche dazu eingerichtet sind, eine Kontaktfläche zwischen der Außenfläche 44 und einer inneren Wandung einer Fluidleitung 48 (siehe Figur 5) und dadurch eine zu überwindende Reibungskraft zu verringern.

In Figur 5 ist eine Seitenquerschnittsansicht der erfindungsgemäßen Fluidverbindungseinheit 10 dargestellt, wobei an der in Figur 5 links dargestellten Hälfte der Fluidverbindungseinheit 10 eine Fluidleitung 48 gerade beginnt, in die Fluidverbindungseinheit 10 eingeschoben zu werden, wobei zusätzlich ein freies Ende der Fluidleitung 48, welches mit der Fluidverbindungseinheit 10 zu verbinden ist, schräg relativ zu einer Mittelachse X der Fluidverbindungseinheit 10 abgeschnitten worden ist. In der rechten Hälfte der in Figur 5 gezeigten Fluidverbindungseinheit 10 ist die Fluidleitung 48 bereits vollständig mit der Fluidverbindungseinheit 10 verbunden. Somit kann durch die Darstellung der Figur 5 die Funktionsweise der erfindungsgemäßen Fluidverbindungseinheit 10 näher erläutert werden, wobei hier angenommen werden kann, dass die linke und die rechte Hälfte der Figur 5 verschiedene Montagestufen einer gleichen Hälfte der Fluidverbindungseinheit 10 zeigen.

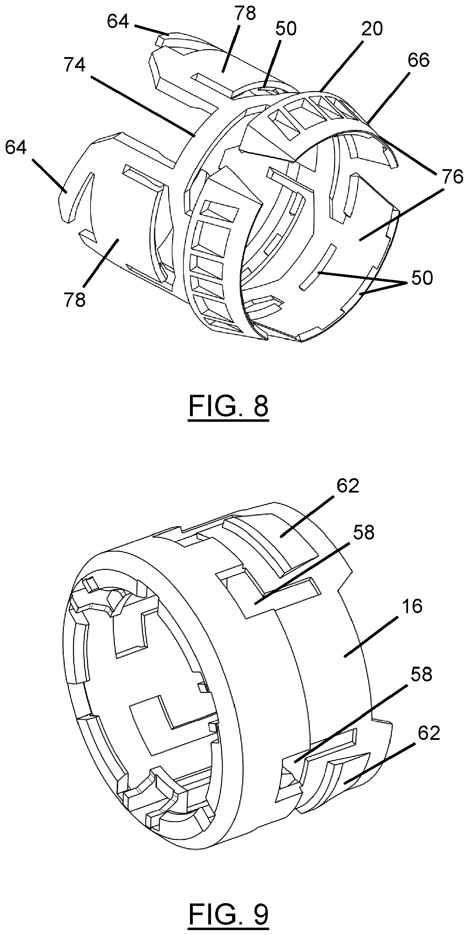

Wie in der linken Hälfte der Figur 5 dargestellt, ist mit dem freien Ende des Stutzenabschnitts 14 des Grundkörpers 12 der Kalibrierungsabschnitt 26 in einer eingegriffenen Weise verbunden. Mit dem Kalibrierungsabschnitt 26 ist wiederum das Schutzelement 22 in seiner anfänglichen Stellung eingegriffen. Dabei wird das Dichtungselement 18 durch den zylindrischen Abschnitt 38 des Schutzelement 22 nach radial innen komprimiert. Der zylindrische Abschnitt 38 liegt hier auf den Abschnitten des Stutzenabschnitts 14 mit nominalen Außendurchmesser 28 auf. Mit dem Grundkörper 12 ist ferner die Anbringungshülse 16 verbunden, mit welcher wiederum die Hülse 24 verrastet ist. Innerhalb der Anbringungshülse 16 und der Hülse 24 ist ferner die Klemmhülse 20 angeordnet, welche dazu dient, über Widerhaken 50 ein Herausziehen der Fluidleitung 48 zu verhindern (siehe hierzu auch die gesonderte Darstellung der Klemmhülse 20 gemäß Figur 8).

Wird die Fluidleitung 48 nun, wie in der rechten Hälfte der Figur 5 dargestellt, vollständig in die Fluidverbindungseinheit 10 eingeschoben, so wird das Schutzelement 22 zusammen mit der Fluidleitung 48 verlagert. In der Endposition des Schutzelements 22 greift eine Rasteinrichtung 52 des Schutzelements 22 mit einer entsprechenden Gegen-Rasteinrichtung 54 der Anbringungshülse 16 ein, so dass eine rückwärtige Bewegung des Schutzelements 22, das heißt in der in Figur 5 dargestellten rechten Hälfte eine Bewegung des Schutzelements 22 nach rechts, verhindert werden kann. In dieser Endposition ist der zylindrische Abschnitt 38 des Schutzelements 22 derart verlagert, dass das Dichtungselement 18 außer Kontakt mit dem Schutzelement 22 getreten ist und gegen eine innere Wandung der Fluidleitung 48 anliegt, um eine fluidische Abdichtung eines inneren Fluidströmungskanals 56 der Fluidverbindungseinheit 10 bzw. der Fluidleitung 48 gegenüber einer Außenseite hin zu gewährleisten.

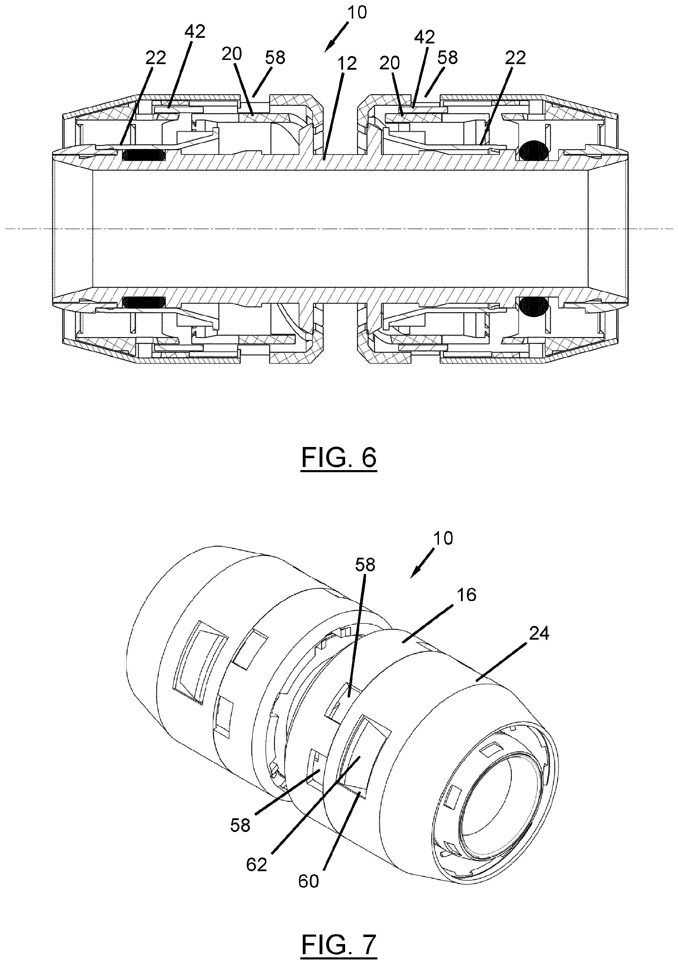

In Figur 6 ist die erfindungsgemäße Fluidverbindungseinheit 10 in einer weiteren Seitenquerschnittsansicht analog zu Figur 5 dargestellt, wobei die Fluidleitung 48 weggelassen worden ist. Die Schnittebene des in Figur 6 gezeigten Schnitts ist relativ zu derjenigen des in Figur 5 gezeigten Schnitts um die Achse X derart rotiert, dass die Schnittebene des Schnitts der Figur 6 durch eine aus einer Mehrzahl von Durchbrechungen 58 (siehe Figur 9) der Anbringungshülse 16 verläuft. Somit kann mit Bezug auf Figur 6 die Funktion des Anzeigeabschnitts 42 des Schutzelements 22 erläutert werden.

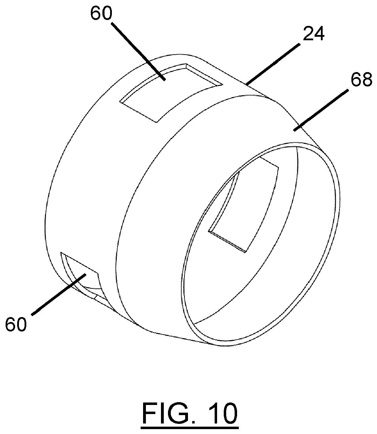

Wie in der zusammengebauten Darstellung der erfindungsgemäßen Fluidverbindungseinheit 10 gemäß Figur 7 zu erkennen ist, ist die Hülse 24 über ein Zusammenwirken von an der Hülse 24 angeordneten Öffnungen 60 (siehe auch Figur 10) und zugehörigen Rastvorsprüngen 62 der Anbringungshülse 16 (siehe auch Figur 9) mit der Anbringungshülse 16 verrastet. In diesem Zustand werden die Durchbrechungen 58 der Anbringungshülse 16 an einer Seite von der Hülse 24 begrenzt.

Mit Bezug nun auf Figur 6, befindet sich das Schutzelement 22 und der damit verbundene Anzeigeabschnitt 42, in der linken Hälfte der Figur 6, in der anfänglichen Stellung, so dass durch die Durchbrechungen 58 die Klemmhülse 20 zu erkennen ist. Die Klemmhülse 20 bzw. zumindest der durch die Durchbrechungen 58 sichtbare Abschnitt der Klemmhülse 20 kann zum Beispiel aus einem roten Kunststoffmaterial hergestellt sein, um zu verdeutlichen, dass das Schutzelement 22 seine Endposition noch nicht erreicht hat.

Hat das Schutzelement 22 seine Endposition erreicht, wie in der rechten Hälfte der Figur 6 dargestellt, so ist der durch die Durchbrechungen 58 sichtbare Abschnitt der Klemmhülse 20 radial außen von dem Anzeigeabschnitt 42 des Schutzelements 22 überlagert, das heißt durch die Durchbrechungen 58 ist nun nur noch der Anzeigeabschnitt 42 des Schutzelements 22 zu erkennen. Insbesondere kann der Anzeigeabschnitt 42 bzw. das gesamte Schutzelement 22 aus einem Kunststoffmaterial ausgebildet sein, welches eine von der Klemmhülse 20 verschiedene Farbe aufweist. Insbesondere kann der Anzeigeabschnitt 42 bzw. das Schutzelement 22 grün sein, um eine korrekte Verbindung der Fluidleitung 48 mit der Fluidverbindungseinheit 10 zu verdeutlichen.

In der gesonderten Darstellung der Klemmhülse 20 gemäß Figur 8 ist ferner zu erkennen, dass die Klemmhülse 20 federnde Arme 64 aufweist, welche sich in dem zusammengebauten Zustand der Fluidverbindungseinheit 10 gegen den Grundkörper 12 und/oder gegen die Anbringungshülse 16 abstützen und somit die Klemmhülse 20 in eine Richtung drängen, welche einer Einführungsrichtung der Fluidleitung 48 in die Fluidverbindungseinheit 10 entgegengerichtet ist. Hierdurch kann zum einen erreicht werden, dass die Widerhaken 50 der Klemmhülse 20 so weit wie möglich von dem freien Ende der Fluidleitung 48 entfernt mit einem Außenumfang der Fluidleitung 48 in Eingriff treten, um ein Spiel der Fluidleitung 48 in der Fluidverbindungseinheit 10 zu verringern oder sogar zu eliminieren. Zum anderen kann durch diese Vorspannung der federnden Arme 64 der Klemmhülse 20 erreicht werden, dass ein konischer Abschnitt 66 der Klemmhülse 20 gegen einen konischen Abschnitt 68 der Hülse 24 gedrängt wird und die Widerhaken 50 stärker mit der Fluidleitung 48 in Eingriff treten können.

Nachzutragen sei an dieser Stelle, dass das Schutzelement 22 hier einen Anschlagsabschnitt 70 (siehe Figur 5) aufweist, mit welchen das freie Ende der Fluidleitung 48 in Kontakt treten kann, um, auf ein weiteres Einschieben der Fluidleitung 48 in die Fluidverbindungseinheit 10 hin, das Schutzelement 22 zusammen mit der Fluidleitung 48 zu verlagern. Der Anschlagsabschnitt 70 kann auch dazu eingerichtet sein, durch einen Kontakt mit dem Grundkörper 12 und/oder mit der Anbringungshülse 16 die Endposition des Schutzelements 22 zu definieren.

Um bei der Montage der Fluidverbindungseinheit 10 ein Aufschieben des Schutzelements 22 auf den Stutzenabschnitt 14 und insbesondere auf das Dichtungselement 18 zu erleichtern, ohne dabei das Dichtungselement 18 zu beschädigen oder aus seinem Sitz heraus zu verlagern, ist dem zylindrischen Abschnitt 38 des Schutzelements 22 eine Einführschräge 72 benachbart angeordnet, das heißt ein Abschnitt des Innendurchmessers des Schutzelements 22 mit ansteigendem Durchmesser.

Nachdem das Schutzelement 22 auf den Stutzenabschnitt 14 bzw. auf das Dichtungselement 18 aufgeschoben worden ist, kann der Kalibrierungsabschnitt 26 mit dem Stutzenabschnitt 14 verbunden werden. Dabei ist insbesondere in den Figuren 5 und 6 zu erkennen, dass ein maximaler Außendurchmesser des Kalibrierungsabschnitt 26 größer oder gleich dem Außendurchmesser des zylindrischen Abschnitts 38 des Schutzelements 22 ist, so dass die Fluidleitung 48, selbst wenn deren freies Ende einen unrunden Querschnitt aufweisen sollte, durch den Kalibrierungsabschnitt 26 derart verformt wird, dass die Fluidleitung 48 auf den zylindrischen Abschnitt 38 des Schutzelements 22 aufgeschoben werden kann. Die hier beschriebene Alternative, wonach der maximale Außendurchmesser des Kalibrierungsabschitts 26 gleich dem Außendurchmesser des zylindrischen Abschnitts 38 ist, ist nicht Teil der beanspruchten Erfindung. Alternativ kann der Kalibrierungsabschnitt 26 auch als ein integraler Teil des Stutzenabschnitts 14 ausgebildet sein. Hierbei könnte das Schutzelement 22 für eine Montage davon beispielsweise in Umfangsrichtung des zylindrischen Abschnitts 38 elastische Abschnitte aufweisen.

Des Weiteren ist in Figur 8 zu erkennen, dass die Klemmhülse 20 einen Basisring 74 aufweist. Von dem Basisring 74 erstrecken sich Vorsprünge 76, in der dargestellten Ausführungsform drei Vorsprünge 76, in einer ersten axialen Richtung (in Figur 8 nach rechts). An der Innenseite der Vorsprünge 76 sind Widerhaken 50 nach radial innen vorstehend. Ferner erstrecken sich Vorsprünge 78 in einer zweiten axialen Richtung (in Figur 8 nach links), welche zu der ersten axialen Richtung entgegengesetzt ist. An dem freien Ende der Vorsprünge 78 sind die federnden Arme 64 angeordnet. An einer Innenseite der Vorsprünge 78 sind ebenfalls Widerhaken 50 nach radial innen vorstehend und hier an den Vorsprüngen 78 federnd angeordnet. Da sich die Vorsprünge 76 und die Vorsprünge 78 relativ zu dem Basisring 74 in entgegengesetzte axiale Richtungen erstrecken und an einer gleichen Stelle, in Umfangsrichtung des Basisrings betrachtet, angeordnet sind, bilden die Vorsprünge 76, 78 jeweils paarweise einen Wippenmechanismus aus. Das heißt, wird einer der Vorsprünge 76 oder 78 nach radial außen verlagert, kann der jeweils andere der Vorsprünge 78 oder 76 nach radial innen verlagert werden.

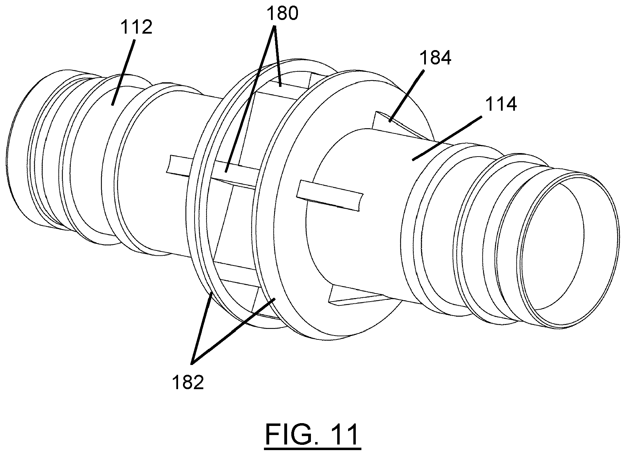

Im Folgenden wird unter Bezugnahme auf Figuren 11 bis 15 ein zweites Ausführungsbeispiel einer erfindungsgemäßen Fluidverbindungseinheit 110 beschrieben, welche eine Abwandlung der zuvor beschriebenen Fluidverbindungseinheit 10 ist, so dass im weiteren Verlauf nur auf die Unterschiede zum ersten Ausführungsbeispiel näher eingegangen wird und in Bezug auf alle anderen Merkmale und Funktionen auf das erste Ausführungsbeispiel verwiesen wird. Demgemäß können sämtliche Merkmale, Effekte und Vorteile, welche in Bezug auf die erste Ausführungsform der Fluidverbindungseinheit 10 offenbart sind, gleichermaßen auf die zweite Ausführungsform der Fluidverbindungseinheit 110 anwendbar sein und umgekehrt.

In Figur 11 ist eine perspektivische Ansicht eines Grundkörpers 112 der erfindungsgemäßen Fluidverbindungseinheit 110 gemäß dem zweiten Ausführungsbeispiel dargestellt. Wie in Figur 11 zu erkennen ist, ist der Grundkörper 112, analog zu dem Grundkörper 12, in Längsrichtung symmetrisch aufgebaut. Aus diesem Grund wird im Folgenden maßgeblich nur auf eine Hälfte des Grundkörpers 112 (bzw. der Fluidverbindungseinheit 110) eingegangen werden, wobei dies ebenfalls auf die andere Hälfte des Grundkörpers 112 (bzw. der Fluidverbindungseinheit 110) anwendbar sein kann.

Der Grundkörper 112 weist im Unterschied zu dem Grundkörper 12 des ersten Ausführungsbeispiels an dessen Außenseite eine Mehrzahl von Verstärkungsrippen 180 auf, welche zwischen zwei Bünden 182 angeordnet sind und im Wesentlichen parallel zu der axialen Erstreckungsrichtung des Grundkörpers 112 verlaufen. Die Verstärkungsrippen 180 tragen maßgeblich dazu bei, dass sich die Bünde 182 auch bei eingeleiteten Kräften nicht deformieren. Entlang der Umfangsrichtung des Grundkörpers 112 können zwei benachbarte Verstärkungsrippen 180 beispielsweise um einen Winkel von 45° versetzt angeordnet sein, wodurch insgesamt acht Verstärkungsrippen 180 an dem Grundkörper 112 angeordnet sind. Die Anzahl der Verstärkungsrippen 180 kann jedoch beliebig anpassbar sein.

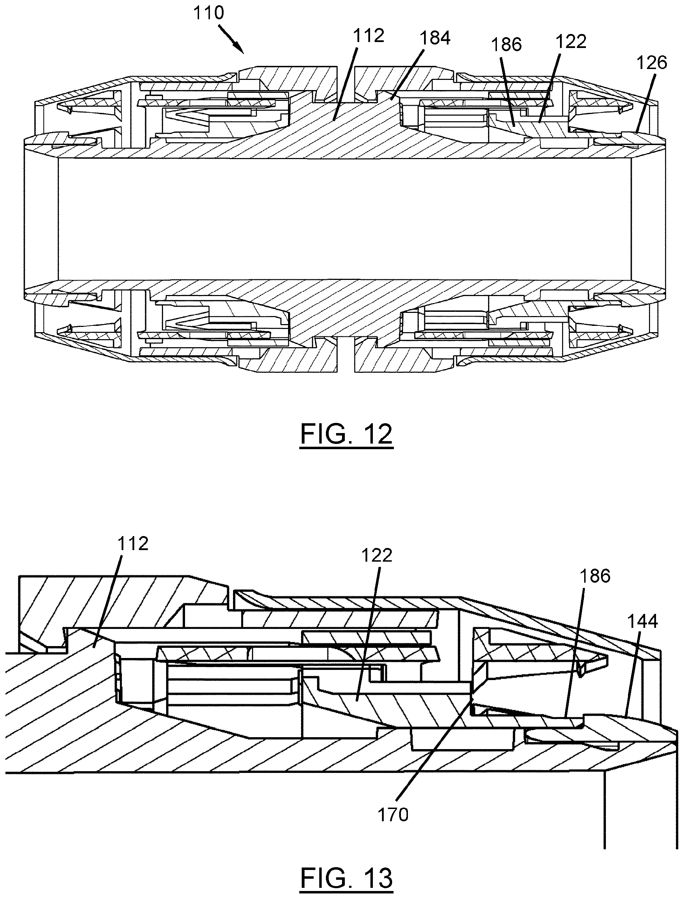

Ferner weist der Grundkörper 112 Anschlagsflächen 184 auf, welche dazu eingerichtet sind, dass eine entsprechende Gegenanlagefläche 186 des Schutzelements 122 (s. Figur 12) damit in Kontakt tritt. Dieser Kontakt kann insbesondere die Endposition des Verlagerungsbereichs des Schutzelements 122 relativ zu dem Grundkörper 112 definieren. Die Anschlagsflächen 184 sind hier derart ausgebildet, dass sie sich von dem nominalen Durchmesser des Stutzenabschnitts 114 des Grundkörpers 112 in Richtung auf die Bünde 184 zu nach radial außen erheben. Somit können die Anschlagsflächen 184 auch dazu dienen, das Schutzelement 122 und somit das daran angeordnete Ende der Fluidleitung relativ zu der Mittelachse X der Fluidverbindungseinheit 110, im Sinne eines Auflagers, stabil zu zentrieren. Natürlich tragen die Anschlagsflächen 184 auch zu einer Verstärkung des entsprechenden Abschnitts am Grundkörper 112 bei.

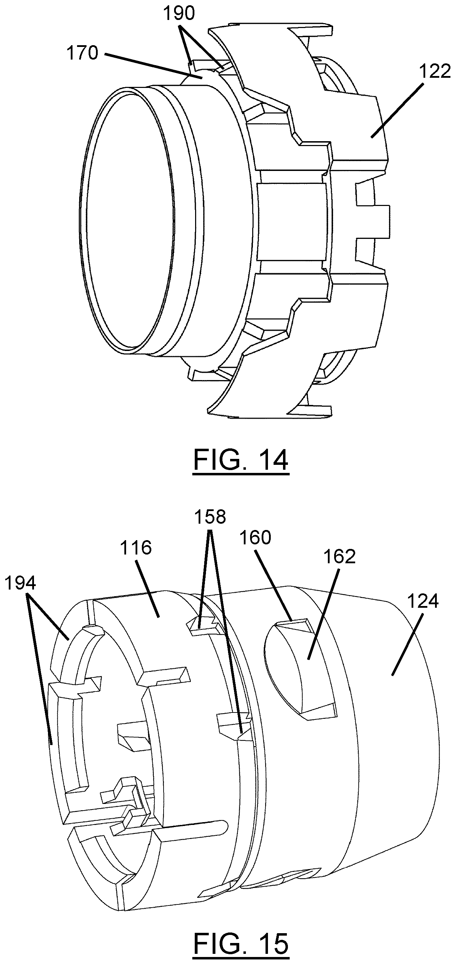

In diesem Zusammenhang wird angemerkt, dass die Fluidverbindungseinheit 110 des zweiten Ausführungsbeispiels zur Anzeige eines verbundenen Zustands der Fluidleitung mit der Fluidverbindungseinheit 110 über den gleichen Kontrollmechanismus wie die Fluidverbindungseinheit 10 des ersten Ausführungsbeispiels verfügen kann, welcher in Bezug auf Figur 6 und der farblichen Kodierung der Klemmhülse sowie dem Anzeigeabschnitt des Schutzelements 122 erläutert wird, wobei die farbliche Kodierung von außen durch Durchbrechungen 158 ersichtlich wird (s. Figur 15).

In Figur 12 ist eine Seitenquerschnittsansicht der erfindungsgemäßen Fluidverbindungseinheit 110 gemäß dem zweiten Ausführungsbeispiel dargestellt, wobei an der in Figur 12 rechts dargestellten Hälfte der Fluidverbindungseinheit 110 das Schutzelement 122 in seiner anfänglichen Stellung vorliegt, wohingegen in der linken Hälfte der in Figur 12 gezeigten Fluidverbindungseinheit 110 das Schutzelement 122 in seiner Endposition gezeigt ist.

In Figur 13, welche ein vergrößertes Detail der rechten Hälfte der Fluidverbindungseinheit 110 aus Figur 12 zeigt, ist zu erkennen, dass das Schutzelement 122 an dessen vorderem Ende, welches in der anfänglichen Stellung des Schutzelements 122 dem Kalibrierungsabschnitt 126 benachbart angeordnet ist, einen abschnittsweise reduzierten Außendurchmesser 186 aufweist. Aufgrund des reduzierten Außendurchmessers 186 entsteht eine Stufe zwischen dem an dieser Stelle radial kleinen Schutzelement 122 und dem hierzu benachbart radial größeren Kalibrierungsabschnitt 126. Hierdurch kann gewährleistet werden, dass das freie Ende der Fluidleitung, welche über den Kalibrierungsabschnitt 126 geschoben wird, zunächst über den reduzierten Außendurchmesser 186 des Schutzelements 122 geschoben wird, ohne das Schutzelement dabei zu kontaktieren und so gegebenenfalls bereits verfrüht zu verlagern.

Der Kalibrierungsabschnitt 126, welcher analog zu dem Kalibrierungsabschnitt 26 des ersten Ausführungsbeispiels zur Erleichterung des Einschiebens der Fluidleitung in die Fluidverbindungseinheit 110 eine sich zum freien Ende hin verjüngende Fläche 144 aufweist, greift über einen Vorsprung (nicht dargestellt) in den Stutzenabschnitt 114 des Grundkörpers 112 ein und wird somit an diesem gesichert.

Des Weiteren ist in Figur 13 zu erkennen, dass das Schutzelement 122 einen im Wesentlichen in radialer Richtung verlaufenden Anschlagsabschnitt 170 aufweist, welcher dazu eingerichtet ist, mit einer Stirnfläche des freien Endes der Fluidleitung in Kontakt zu treten und so eine Einschubskraft von der Fluidleitung besser aufnehmen und auf das Schutzelement 122 übertragen zu können. Das Schutzelement 122 verläuft nach dem Anschlagsabschnitt 170 in Richtung des Endes des Schutzelements 122, welches dem reduzierten Außendurchmesser 186 entgegengesetzt ist, mit einem vergrößerten Außendurchmesser weiter, so dass es in seiner anfänglichen Stellung einer Rückstellkraft des Dichtungselements (im zweiten Ausführungsbeispiel nicht dargestellt) entgegenwirken kann und beispielsweise ein Kriechen des Materials des Schutzelements 122 reduziert oder sogar verhindert werden kann.

In der perspektivischen Ansicht des Schutzelements 122 aus Figur 14 ist ersichtlich, dass der Anschlagsabschnitt 170 nicht zwangsläufig als durchgängige Durchmesservergrößerung ausgebildet sein muss, sondern, wie hier dargestellt, auch aus einer Mehrzahl von in Längsrichtung verlaufenden Rippen 190 gebildet sein kann, deren Stirnflächen in Summe zu dem Anschlagsabschnitt 170 beitragen. Dies kann Materialanhäufungen am Schutzelement 122 vermeiden und somit Kosten reduzieren und eine Maßhaltigkeit, insbesondere bei Kunststoffteilen, verbessern.

Figur 15 stellt eine perspektivische Ansicht einer Anbringungshülse 116 sowie einer Hülse 124 der Fluidverbindungseinheit 110 gemäß dem zweiten Ausführungsbeispiel dar, wobei die Anordnung der Anbringungshülse 116 und der Hülse 124 dem verbundenen Zustand der Fluidverbindungseinheit 110 entspricht. Die Anbringungshülse 116 umfasst Längsschlitze 192, welche sich zu der Mittelachse X im Wesentlichen parallel erstrecken. Durch das Bereitstellen der Längsschlitze 192 entstehen zwischen diesen laschenartige Rastelemente 194, welche sich im Vergleich zu einer durchgehenden Hülse leichter elastisch verformen lassen, um die Anbringungshülse 116 über die Rastelemente 194 mit einem jeweiligen Bund 184 zu verbinden. Folglich können die Längsschlitze 192 eine Montage der Fluidverbindungseinheit 110 vereinfachen, da sie den notwendigen Kraftaufwand reduzieren und Beschädigungen verhindern können.

Die Hülse 124 weist in Figur 15 Öffnungen 160 auf, welche im Wesentlichen D-förmig bzw. einseitig bogenförmig sind, wobei die Bogenform der Öffnungen 160 insbesondere an der der Anbringungshülse 116 zugewandten Seite ausgebildet ist. Komplementär dazu sind an der Anbringungshülse 116 Rastvorsprünge 162 vorhanden, welche in einer komplementären Form ausgebildet sind, um in die Öffnungen 160 einzugreifen und somit die Hülse 124 mit der Anbringungshülse 116 zu verrasten. Die einseitig bogenförmige Form der Rastvorsprünge 162 hat den Vorteil, dass eine im Fall von axialer Zugbelastung an der Hülse 124 auftretende Kraft (beispielsweise beim Herausziehen der Fluidleitung aus der Fluidverbindungseinheit 110) gleichmäßiger als bei rechteckigen Rastvorsprüngen 62 auf die rundlichen Rastvorsprünge übertragen werden kann, so dass Kerbwirkungen an den Öffnungen 160 reduziert werden können.

## Patentansprüche

1. Fluidverbindungseinheit (10, 110), welche dazu eingerichtet ist, eine, nicht zu der Fluidverbindungseinheit (10, 110) gehörende, Fluidleitung (48) mit einer weiteren, ebenfalls nicht zu der Fluidverbindungseinheit (10, 110) gehörenden, Fluidleitung zu verbinden,
wobei die Fluidverbindungseinheit (10, 110) einen Stutzenabschnitt (14, 114) umfasst, welcher dazu eingerichtet ist, in die Fluidleitung (48) eingeführt zu werden, und welcher einen nominalen Außendurchmesser (28) aufweist,
wobei an dem Außenumfang des Stutzenabschnitts (14, 114) wenigstens ein Dichtungselement (18), insbesondere ein O-Ring, angeordnet ist, welches dazu eingerichtet ist, im verbunden Zustand der Fluidverbindungseinheit (10, 110) mit der Fluidleitung (48), einen Abstand zwischen der Fluidverbindungseinheit (10, 110) und der Fluidleitung (48) zu überbrücken und somit die Verbindung zu einer Außenseite hin abzudichten,
wobei die Fluidverbindungseinheit (10, 110) ein Schutzelement (22, 122) umfasst, welches außen an dem Stutzenabschnitt (14, 114) aus einer anfänglichen Stellung an dem Stutzenabschnitt (14, 114) in eine Endposition verlagerbar angeordnet ist, und welches zumindest an seiner radial inneren Seite einen im Wesentlichen zylindrischen Abschnitt (38) umfasst,
wobei das wenigstens eine Dichtungselement (18) in der anfänglichen Stellung radial außen von dem zylindrischen Abschnitt (38) des Schutzelements (22, 122) überlagert ist,
wobei der zylindrische Abschnitt (38) des Schutzelements (22, 122) einen Innendurchmesser aufweist, welcher im Wesentlichen dem nominalen Außendurchmesser (28) des Stutzenabschnitts (14, 114) entspricht,
wobei der zylindrische Abschnitt (38) des Schutzelements (22, 122) dazu eingerichtet ist, an seiner Außenseite die zu verbindende Fluidleitung (48) aufzunehmen, und
wobei die Fluidverbindungseinheit (10, 110) ferner einen Kalibrierungsabschnitt (26, 126) umfasst, welcher an einem freien Ende des Stutzenabschnitts (14, 114) angeordnet ist, und welcher einen in Richtung des freien Endes des Stutzenabschnitts (14, 114) abnehmenden Außendurchmesser (44, 144) aufweist,
**dadurch gekennzeichnet, dass** der maximale Außendurchmesser des Kalibrierungsabschnitts (26, 126) größer als der in der anfänglichen Stellung dazu benachbarte Außendurchmesser des zylindrischen Abschnitts (38) des Schutzelements (22, 122) ist.

2. Fluidverbindungseinheit (10, 110) nach Anspruch 1,
**dadurch gekennzeichnet, dass** der Kalibrierungsabschnitt (26, 126) von dem Stutzenabschnitt (14, 114) und dem Schutzelement (22, 122) getrennt oder trennbar ausgebildet ist.

3. Fluidverbindungseinheit (10, 110) nach einem der vorhergehenden Ansprüche,
**dadurch gekennzeichnet, dass** der Kalibrierungsabschnitt (26, 126) an einer nach außen weisenden Fläche wenigstens eine Ausnehmung (46) aufweist.

4. Fluidverbindungseinheit (10, 110) nach einem der vorhergehenden Ansprüche,
**dadurch gekennzeichnet, dass** das Schutzelement (22, 122) einen Abschnitt umfasst, welcher, in einer anfänglichen Stellung, an einer radial inneren Seite und/oder an einer radial äußeren Seite davon von einem Abschnitt des Kalibrierungsabschnitts (26, 126) überlagert ist.

5. Fluidverbindungseinheit (10, 110) nach einem der vorhergehenden Ansprüche,
**dadurch gekennzeichnet, dass** das Schutzelement (22, 122) in einer anfänglichen Stellung mit dem Kalibrierungsabschnitt (26, 126) gekoppelt ist.

6. Fluidverbindungseinheit (10, 110) nach einem der vorhergehenden Ansprüche,
**dadurch gekennzeichnet, dass** der Kalibrierungsabschnitt (26, 126) mit dem Stutzenabschnitt (14, 114) eingegriffen ist.

7. Fluidverbindungseinheit (10, 110) nach dem vorhergehenden Anspruch, **dadurch gekennzeichnet, dass** eines aus Kalibrierungsabschnitt (26, 126) und Stutzenabschnitt (14, 114) einen Vorsprung (36) und das andere eine dazu passende Ausnehmung aufweist, und
dass der Vorsprung (36) und/oder die Ausnehmung in Umfangsrichtung des Stutzenabschnitts (14, 114) bzw. des Kalibrierungsabschnitts (26, 126) vollständig umlaufend ist.

8. Fluidverbindungseinheit (10, 110) nach einem der vorhergehenden Ansprüche,
**dadurch gekennzeichnet, dass** das Schutzelement (22, 122) einen Anschlagsabschnitt (70, 170) umfasst, welcher dazu eingerichtet ist, mit einem freien Ende der Fluidleitung (48) in Kontakt zu treten, so dass das Schutzelement (22, 122) zusammen mit der Fluidleitung (48) verlagert wird, wenn die Fluidleitung (48), nach dem Kontaktieren des Anschlagsabschnitts (70, 170), weiter auf den Stutzenabschnitt (14, 114) aufgeschoben wird.

9. Fluidverbindungseinheit (10, 110) nach einem der vorhergehenden Ansprüche,
**dadurch gekennzeichnet, dass** die Fluidverbindungseinheit (10, 110) ferner eine Hülse (24, 124) und/oder eine Anbringungshülse (16, 116) umfasst, welche den Stutzenabschnitt (14, 114) radial außerhalb zumindest teilweise umgibt.

10. Fluidverbindungseinheit (10, 110) nach Anspruch 9,
**dadurch gekennzeichnet, dass** die Hülse (24, 124) und/oder die Anbringungshülse (16, 116) wenigstens eine Durchbrechung (58, 158) umfasst, welche in radialer Richtung durch die Wandung der Hülse (24, 124) bzw. der Anbringungshülse (16, 116) verläuft, wobei die Durchbrechung (58, 158) der Hülse (24, 124) bzw. der Anbringungshülse (16, 116) derart angeordnet ist, dass von außen erkennbar ist, wenn das Schutzelement (22, 122) die Endposition an dem Stutzenabschnitt (14, 114) erreicht hat.

11. Fluidverbindungseinheit (10, 110) nach Anspruch 10,
**dadurch gekennzeichnet, dass** zumindest derjenige Abschnitt (42) des Schutzelements (22, 122), welcher in dessen Endposition durch die Durchbrechung (58, 158) der Hülse (24, 124) bzw. der Anbringungshülse (16, 116) erkennbar ist, eine vorbestimmte Farbe aufweist, welche von einer Farbe eines Abschnitts (20) der Fluidverbindungseinheit (10, 110) verschieden ist, welcher durch die Durchbrechung (58, 158) der Hülse (24, 124) bzw. der Anbringungshülse (16, 116) in einer anfänglichen Stellung des Schutzelements (22, 122) erkennbar ist.

12. Fluidverbindungseinheit (10, 110) nach einem der vorhergehenden Ansprüche,
**dadurch gekennzeichnet, dass** das Schutzelement (22, 122) dazu eingerichtet ist, das wenigstens eine Dichtungselement (18) nach radial innen zu komprimieren.

13. Fluidverbindungseinheit (10, 110) nach einem der vorhergehenden Ansprüche,
**dadurch gekennzeichnet, dass** der Stutzenabschnitt (14, 114) einen Bereich mit verringertem Außendurchmesser (32) aufweist, welcher, in einer Verlagerungsrichtung des Schutzelements (22, 122) von der anfänglichen Stellung an dem Kalibrierungsabschnitt (26, 126) in Richtung der Endposition des Schutzelements (22, 122) betrachtet, dem wenigstens einen Dichtungselement (18) nachgelagert ist.

14. Fluidverbindungseinheit (10, 110) nach einem der vorhergehenden Ansprüche,
**dadurch gekennzeichnet, dass** der Innendurchmesser des Schutzelements (22, 122) an wenigstens einem axialen Ende davon ansteigt.

15. Fluidverbindungseinheit (10, 110) nach einem der vorhergehenden Ansprüche,
**dadurch gekennzeichnet, dass** das Schutzelement eine Rasteinrichtung (52) aufweist, welche dazu eingerichtet ist, das Schutzelement in der Endposition zu halten.

## Claims

1. Fluid connection unit (10, 110), which is adapted to connect a fluid line (48) not belonging to the fluid connection unit (10, 110) to a further fluid line, also not belonging to the fluid connection unit (10, 110),
wherein the fluid connection unit (10, 110) comprises a neck portion (14, 114) which is adapted to be inserted into the fluid line (48) and which has a nominal outer diameter (28),
wherein at least one sealing element (18), in particular an O-ring, is arranged on the outer circumference of the neck portion (14, 114), which sealing element (18) is adapted to bridge a distance between the fluid connection unit (10, 110) and the fluid line (48) when the fluid connection unit (10, 110) is connected to the fluid line (48) and thus to seal the connection with respect to an outside,
wherein the fluid connection unit (10, 110) comprises a protective element (22, 122) which is arranged on the outside of the neck portion (14, 114) so as to be displaceable from an initial position on the neck portion (14, 114) to an end position, and which comprises a substantially cylindrical portion (38) at least on its radially inner side,
wherein the at least one sealing element (18) in the initial position is radially outwardly overlaid by the cylindrical portion (38) of the protective element (22, 122),
wherein the cylindrical portion (38) of the protective element (22, 122) has an inner diameter which substantially corresponds to the nominal outer diameter (28) of the neck portion (14, 114),
wherein the cylindrical portion (38) of the protective element (22, 122) is adapted to receive the fluid line (48) to be connected on its outer side, and
wherein the fluid connection unit (10, 110) further comprises a calibration portion (26, 126) which is arranged at a free end of the neck portion (14, 114) and which has an outer diameter (44, 144) that decreases towards the free end of the neck portion (14, 114),
**characterised in that** the maximum outer diameter of the calibration portion (26, 126) is greater than the outer diameter of the cylindrical portion (38) of the protective element (22, 122) adjacent thereto in the initial position.

2. Fluid connection unit (10, 110) according to claim 1,
**characterised in that** the calibration portion (26, 126) is configured to be separate or separable from the neck portion (14, 114) and from the protective element (22, 122).

3. Fluid connection unit (10, 110) according to any of the preceding claims, **characterised in that** the calibration portion (26, 126) has at least one recess (46) on an outwardly facing surface.

4. Fluid connection unit (10, 110) according to any of the preceding claims, **characterised in that** the protective element (22, 122) comprises a portion which, in an initial position, is overlaid on a radially inner side and/or on a radially outer side thereof by a portion of the calibration portion (26, 126).

5. Fluid connection unit (10, 110) according to any of the preceding claims, **characterised in that,** in an initial position, the protective element (22, 122) is coupled to the calibration portion (26, 126).

6. Fluid connection unit (10, 110) according to any of the preceding claims, **characterised in that** the calibration portion (26, 126) is engaged with the neck portion (14, 114).

7. Fluid connection unit (10, 110) according to the preceding claim, **characterised in that** one out of the calibration portion (26, 126) and the neck portion (14, 114) has a projection (36) and the other has a matching recess, and the projection (36) and/or the recess is fully circumferential in the circumferential direction of the neck portion (14, 114) or of the calibration portion (26, 126).

8. Fluid connection unit (10, 110) according to any of the preceding claims, **characterised in that** the protective element (22, 122) comprises a stop portion (70, 170) which is adapted to come into contact with a free end of the fluid line (48), so that the protective element (22, 122) is displaced together with the fluid line (48) when the fluid line (48), after coming into contact with the stop portion (70, 170), is pushed further onto the neck portion (14, 114).

9. Fluid connection unit (10, 110) according to any of the preceding claims, **characterised in that** the fluid connection unit (10, 110) further comprises a sleeve (24, 124) and/or an attachment sleeve (16, 116) which at least partially surrounds the neck portion (14, 114) radially outside.

10. Fluid connection unit (10, 110) according to claim 9,
**characterised in that** the sleeve (24, 124) and/or the attachment sleeve (16, 116) comprises at least one aperture (58, 158) which runs in the radial direction through the wall of the sleeve (24, 124) or of the attachment sleeve (16, 116), the aperture (58, 158) of the sleeve (24, 124) or of the attachment sleeve (16, 116) being arranged in such a way that it is recognisable from the outside when the protective element (22, 122) has reached the end position on the neck portion (14, 114).

11. Fluid connection unit (10, 110) according to claim 10,
**characterised in that** at least that portion (42) of the protective element (22, 122) which, in its end position, is recognisable through the aperture (58, 158) of the sleeve (24, 124) or of the attachment sleeve (16, 116) has a predetermined colour which is different from a colour of a portion (20) of the fluid connection unit (10, 110) which is recognisable through the aperture (58, 158) of the sleeve (24, 124) or the attachment sleeve (16, 116) with the protective element (22, 122) in an initial position.

12. Fluid connection unit (10, 110) according to any of the preceding claims, **characterised in that** the protective element (22, 122) is adapted to compress the at least one sealing element (18) radially inwards.

13. Fluid connection unit (10, 110) according to any of the preceding claims, **characterised in that** the neck portion (14, 114) has a region with a reduced outer diameter (32) which, viewed in a displacement direction of the protective element (22, 122) from the initial position at the calibration portion (26, 126) towards the end position of the protective element (22, 122), is located downstream of the at least one sealing element (18).

14. Fluid connection unit (10, 110) according to any of the preceding claims, **characterised in that** the inner diameter of the protective element (22, 122) increases at least at one axial end thereof.

15. Fluid connection unit (10, 110) according to any of the preceding claims, **characterised in that** the protective element has a latching device (52) which is adapted to hold the protective element in the end position.

## Revendications

1. Unité de communication fluidique (10, 110) conçue pour connecter une conduite de fluide (48), n'appartenant pas à l'unité de communication fluidique (10, 110), à une autre conduite de fluide n'appartenant pas non plus à l'unité de communication fluidique (10, 110),
dans laquelle
l'unité de communication fluidique (10, 110) comprend une partie de tubulure (14, 114) conçue pour être insérée dans la conduite de fluide (48) et ayant un diamètre extérieur nominal (28),
au moins un élément d'étanchéité (18), en particulier un joint torique, est disposé sur la périphérie extérieure de la partie de tubulure (14, 114), lequel est conçu pour, dans l'état connecté de l'unité de communication fluidique (10, 110) avec la conduite de fluide (48), combler une distance entre l'unité de communication fluidique (10, 110) et la conduite de fluide (48) et ainsi rendre la connexion étanche par rapport à un côté extérieur,
l'unité de communication fluidique (10, 110) comprend un élément de protection (22, 122) qui est disposé à l'extérieur sur la partie de tubulure (14, 114) de manière à pouvoir être déplacé d'une position initiale sur la partie de tubulure (14, 114) à une position de fin de course, et qui comprend une partie sensiblement cylindrique (38) au moins sur son côté radialement intérieur,
dans la position initiale, ledit au moins un élément d'étanchéité (18) est superposé radialement à l'extérieur par la partie cylindrique (38) de l'élément de protection (22, 122),
la partie cylindrique (38) de l'élément de protection (22, 122) présente un diamètre intérieur qui correspond sensiblement au diamètre extérieur nominal (28) de la partie de tubulure (14, 114),
la partie cylindrique (38) de l'élément de protection (22, 122) est conçue pour recevoir sur son côté extérieur la conduite de fluide (48) à connecter, et l'unité de communication fluidique (10, 110) comprend en outre une partie de calibrage (26, 126) qui est disposée à une extrémité libre de la partie de tubulure (14, 114) et qui présente un diamètre extérieur (44, 144) qui diminue en direction de l'extrémité libre de la partie de tubulure (14, 114), **caractérisée en ce que** le diamètre extérieur maximal de la partie de calibrage (26, 126) est supérieur ou égal au diamètre extérieur de la partie cylindrique (38) de l'élément de protection (22, 122) qui lui est adjacent dans la position initiale.

2. Unité de communication fluidique (10, 110) selon la revendication 1, **caractérisée en ce que** la partie de calibrage (26, 126) est séparée ou séparable de la partie de tubulure (14, 114) et de l'élément de protection (22, 122).

3. Unité de communication fluidique (10, 110) selon l'une des revendications précédentes,
**caractérisée en ce que** la partie de calibrage (26, 126) présente au moins un évidement (46) sur une face tournée vers l'extérieur.

4. Unité de communication fluidique (10, 110) selon l'une des revendications précédentes,
**caractérisée en ce que** l'élément de protection (22, 122) comprend une partie qui, dans une position initiale, est superposée, sur un côté radialement intérieur et/ou sur un côté radialement extérieur de celle-ci, par une portion de la partie de calibrage (26, 126).

5. Unité de communication fluidique (10, 110) selon l'une des revendications précédentes,
**caractérisée en ce que** l'élément de protection (22, 122) est couplé à la partie de calibrage (26, 126) dans une position initiale.

6. Unité de communication fluidique (10, 110) selon l'une des revendications précédentes,
**caractérisée en ce que** la partie de calibrage (26, 126) est en engagement avec la partie de tubulure (14, 114).

7. Unité de communication fluidique (10, 110) selon l'une des revendications précédentes,
**caractérisée en ce qu'**une partie parmi la partie de calibrage (26, 126) et la partie de tubulure (14, 114) présente une saillie (36), et l'autre présente un évidement adapté à celle-ci, et
**en ce que** la saillie (36) et/ou l'évidement s'étend sur tout le pourtour de la partie de tubulure (14, 114) ou de la partie de calibrage (26, 126) dans la direction circonférentielle.

8. Unité de communication fluidique (10, 110) selon l'une des revendications précédentes,
**caractérisée en ce que** l'élément de protection (22, 122) comprend une partie de butée (70, 170) conçue pour entrer en contact avec une extrémité libre de la conduite de fluide (48), de sorte que l'élément de protection (22, 122) est déplacé conjointement avec la conduite de fluide (48) lorsque la conduite de fluide (48), après être entrée en contact avec la partie de butée (70, 170), est enfilée davantage sur la partie de tubulure (14, 114).

9. Unité de communication fluidique (10, 110) selon l'une des revendications précédentes,
**caractérisée en ce que** l'unité de communication fluidique (10, 110) comprend en outre un manchon (24, 124) et/ou un manchon de fixation (16, 116) qui entoure au moins partiellement la partie de tubulure (14, 114) radialement à l'extérieur.

10. Unité de communication fluidique (10, 110) selon la revendication 9, **caractérisée en ce que** le manchon (24, 124) et/ou le manchon de fixation (16, 116) présente au moins une traversée (58, 158) traversant la paroi du manchon (24, 124) ou du manchon de fixation (16, 116) dans la direction radiale, la traversée (58, 158) du manchon (24, 124) ou du manchon de fixation (16, 116) étant disposée de telle sorte qu'il est possible de reconnaître de l'extérieur si l'élément de protection (22, 122) a atteint la position de fin de course sur la partie de tubulure (14, 114).

11. Unité de communication fluidique (10, 110) selon la revendication 10, **caractérisée en ce qu'**au moins la partie (42) de l'élément de protection (22, 122) qui, dans sa position de fin de course, est visible à travers la traversée (58, 158) du manchon (24, 124) ou du manchon de fixation (16, 116) est d'une couleur prédéfinie qui est différente d'une couleur d'une partie (20) de l'unité de communication fluidique (10, 110) qui est visible à travers la traversée (58, 158) du manchon (24, 124) ou du manchon de fixation (16, 116) dans une position initiale de l'élément de protection (22, 122).

12. Unité de communication fluidique (10, 110) selon l'une des revendications précédentes,
**caractérisée en ce que** l'élément de protection (22, 122) est conçu pour comprimer ledit au moins un élément d'étanchéité (18) radialement vers l'intérieur.

13. Unité de communication fluidique (10, 110) selon l'une des revendications précédentes,
**caractérisée en ce que** la partie de tubulure (14, 114) comprend une zone de diamètre extérieur réduit (32) qui, vue dans une direction de déplacement de l'élément de protection (22, 122) depuis la position initiale sur la partie de calibrage (26, 126) vers la position de fin de course de l'élément de protection (22, 122), est disposée en aval dudit au moins un élément d'étanchéité (18).

14. Unité de communication fluidique (10, 110) selon l'une des revendications précédentes,
**caractérisée en ce que** le diamètre intérieur de l'élément de protection (22, 122) augmente à au moins une extrémité axiale de celui-ci.

15. Unité de communication fluidique (10, 110) selon l'une des revendications précédentes,
**caractérisée en ce que** l'élément de protection comprend un moyen d'encliquetage (52) conçu pour maintenir l'élément de protection dans la position de fin de course.
